# EUROPÄISCHE PATENTSCHRIFT

(11) **EP 2 085 175 B1**
(45) Veröffentlichungstag und Bekanntmachung des Hinweises auf die Patenterteilung: **15.10.2014**
(21) Anmeldenummer: 09000522.4
(22) Anmeldetag: 15.01.2009
(51) Int. Cl.: B23K 35/38, B23K 9/23, B23K 9/16, B23K 1/19, B23K 103/14

(54) **Verfahren zum Lichtbogenfügen**
Method for light arc joining
Procédé destiné à la réalisation d'un arc électrique

(30) Priorität: 29.01.2008 DE 102008006557
(43) Veröffentlichungstag der Anmeldung: 05.08.2009
(73) Patentinhaber: Linde AG, 80331 München (DE)
(72) Erfinder: Ammann, Thomas, 81379 München (DE)
(74) Vertreter: Gellner, Bernd

(56) Entgegenhaltungen:
- EP-A- 0 544 187
- EP-A- 0 639 423
- EP-A- 0 639 427
- EP-A- 1 277 539
- EP-A- 1 491 278
- EP-A- 1 815 937

## Beschreibung

### Technisches Gebiet

Die vorliegende Erfindung betrifft ein Verfahren zum Lichtbogenfügen gemäß dem Oberbegriff des Anspruchs 1.

### Stand der Technik

Lichtbogenfügen unter Schutzgas ist eine häufig eingesetzte Fügetechnik, die insbesondere das Lichtbogenschweißen und das Lichtbogenlöten umfasst. Eine in der metallverarbeitenden Industrie zum Fügen von Titan verwendete Technologie des Lichtbogenfügens ist das M[etall-]S[chutz]G[as]-Fügen, insbesondere das M[etall-]S[chutz]G[as]-Schweißen und/oder das M[etall-]S[chutz]G[as]-Löten; vgl. beispielsweise die Dokumente
- "Wired for sound results ... pulsed MIG welding of titanium", veröffentlicht von The Welding Institute (TWI) im TWI-Bulletin Januar 2006, Seiten 8 bis 12, und
- "Gas Metal Arc Pulse Robotic Welding of s Titanium Ballistic Hull for the US Army Composite Armored Vehicle Integrated Hybrid Structure Program" von Matthew Hummers und Stephen Luckowski anlässlich FABTECH International & AWS Welding Show 2003, Chicago, USA.

Beim Metall-Schutzgas-Fügen, insbesondere beim Metall-Schutzgas-Schweißen brennt ein Lichtbogen zwischen der abschmelzenden Elektrode und dem Werkstück. Der Materialübergang von der Elektrode in das Werkstück ist abhängig von der Regelung des Schweißstroms. Es wird zwischen vier großen Gruppen unterschieden, nämlich dem Schweißen mit Gleichstrom, dem Schweißen mit Impulsstrom, dem Schweißen mit Wechselstrom und dem Schweißen mit Kurzschluss, bei dem ein Kurzlichtbogen brennt. Diese Schweißverfahren unterscheiden sich im ihrem Verhalten hinsichtlich Prozessstabilität, Einbrand, Porenentstehung und Porenhäufigkeit, Oxidationsanfälligkeit, Fließfähigkeit der Schmelze und Lichtbogenstabilität wesentlich. Insbesondere wenn der Schweißprozess hinsichtlich Schweißgeschwindigkeit, Einbringung an Zusatzmaterial oder/und Qualität verbessert und optimiert werden muss, zeigen sich diese Unterschiede.

Das bevorzugte Verfahren zum Fügen, insbesondere zum Schweißen und/oder zum Löten, von Titan ist das W[olfram-]I[nert]G[as]-Fügen.

Zum MSG-Fügen verschiedenster Materialien wird üblicherweise ein Schutzgas verwendet, das zusätzlich zur inerten Basis aus Argon oder aus Helium noch geringe Mengen aktiver Gase, beispielsweise Sauerstoff (O₂) oder Kohlendioxid (CO₂), enthält. Das Inertgas, beispielsweise ein Edelgas(gemisch) aus Argon und/oder aus Helium, schützt das flüssige Metall unter dem Lichtbogen vor Oxidation. Der Aktivgasanteil sorgt unter anderem für eine hohe Lichtbogenstabilität, einen guten Einbrand und eine geringe Oberflächenspannung der Schmelze.

Beispielsweise wird von der Firma Linde AG unter dem Markennamen VARIGON S zum Metall-Schutzgas-Schweißen (MSG-Schweißen) von Aluminiumlegierungen ein Schutzgasgemisch aus Argon mit 0,03 Volumenprozent (Vol.-%) Sauerstoff angeboten (vgl. zum Beispiel das Dokument "Leistung durch Innovation und Kompetenz. Die Linde Schweißschutzgase.", herausgegeben von Firma Linde AG, Bestell-Nr. 43385260 0805 - 1.5 Au).

Die Dotierung des inerten Argons mit geringem Anteil einer aktiven Komponente stabilisiert den Lichtbogen, was sich positiv auf das Schweißergebnis auswirkt und insbesondere ein verbessertes Nahtaussehen, eine gleichmäßigere Nahtschuppung und einen geringeren Spritzerauswurf bewirkt.

Ferner wird von der Firma Linde AG unter dem Markennamen VARIGON He30S zum MSG-Schweißen von Aluminiumlegierungen ein Schutzgasgemisch aus Argon mit 30 Vol.-% Helium und mit 0,03 Vol.-% Sauerstoff angeboten (vgl. zum Beispiel das Dokument "Leistung durch Innovation und Kompetenz. Die Linde Schweißschutzgase.", herausgegeben von Firma Linde AG, Bestell-Nr. 43385260 0805 - 1.5 Au). Durch den Heliumanteil wird der Lichtbogen heißer, breiter und steifer, was insbesondere das MSG-Schweißen von dick-dünn-Verbindungen, beispielsweise von einem Blech mit einer Stärke von etwa drei Millimetern an einem Blech mit einer Stärke von etwa acht Millimetern, vereinfacht.

Des Weiteren ist im Stand der Technik aus der Druckschrift EP 0 639 423 A1 bekannt, beim Schutzgas-Lichtbogenschweißen von Aluminiumwerkstoffen und von Aluminiumlegierungen eine Schutzgasmischung aus Argon und/oder aus Helium mit einem Anteil von 0,01 Volumenprozent (Vol.-%) bis 0,7 Vol.-% Sauerstoff oder Kohlendioxid zuzuführen.

Zum M[etall-]A[ktiv]G[as]-Schweißen von korrosionsstabilen Stählen (vgl. Druckschrift EP 0 639 427 A1 aus dem Stand der Technik), beispielsweise von nickelbasierten Werkstoffen, bietet die Firma Linde AG unter dem Markennamen CRONIGON Ni10 ein Schutzgasgemisch aus Argon mit 30 Vol.-% Helium, mit 2 Vol.-% Wasserstoff und mit 0,05 Vol.-% Kohlendioxid an (vgl. zum Beispiel das Dokument "Leistung durch Innovation und Kompetenz. Die Linde Schweißschutzgase.", herausgegeben von Firma Linde AG, Bestell-Nr. 43385260 0805 - 1.5 Au). Der Heliumanteil führt sowohl zu einem verbesserten Fließverhalten als auch zu einem verbesserten Nahtaussehen, während durch den gegenüber üblichen Schutzgasen für nichtrostende Stähle deutlich herabgesetzten Anteil von Kohlendioxid die Korrosionsbeständigkeit des Werkstoffs gewahrt bleibt.

Darüber hinaus ist im Stand der Technik aus der Druckschrift EP 0 544 187 A1 bekannt, zum Schutzgas-Lichtbogen-Schweißen von korrosionsbeständigen Stählen, insbesondere von Nickeiwerkstoffen, ein mit Kohlendioxid und/oder mit Sauerstoff dotiertes Schutzgas zuzuführen.

Weiterhin ist aus der EP 1 491 278 ein Verfahren zum Metall-Schutzgas-Fügen mit wechselnder Polarität bekannt, bei welchem ein mit Kohlendioxid, Sauerstoff, Stickstoff, Stickstoffmonoxid und/oder Distickstoffmonoxid dotiertes Schutzgas empfohlen wird.

Titan gilt jedoch beim Fügen als gegenüber aktiven Gasbestandteilen wie Sauerstoff, Stickstoff oder Wasserstoff sehr empfindlich; deshalb werden zum Fügen von Titan konventionellerweise ausschließlich inerte Gase empfohlen (vgl. zum Beispiel die Druckschrift EP 1 815 937 A1 aus dem Stand der Technik). Auch in der Deutschen Norm DIN EN 439, welche Schutzgase zum Lichtbogenschweißen und Schneiden nennt, wird für Titan eine besondere Reinheit verlangt.

Das Fügen von Titan erfolgt somit gemäß dem Stand der Technik mittels des Verfahrens des Metall-Inertgas-Fügens, also des Metall-Schutzgas-Fügens mit inerten Gasen, wie Argon, Helium oder Argon-Helium-Gemischen.

Um Verbesserungen im Werkstoffübergang sowie in den sonstigen Schweißeigenschaften beim Metall-Inertgas-Fügen zu erzielen, wird in der Druckschrift EP1 277 539 B1 aus dem Stand der Technik vorgeschlagen, bei Verwendung einer abschmelzenden Elektrode aus Titan, etwa eines Titan-Schweißdrahts, die Oberfläche dieses Titan-Zusatzdrahts mit Sauerstoff anzureichern. Dies erfordert jedoch die Bereitstellung einer separaten Sauerstoff-Zufuhr zur abschmelzenden Elektrode, was aufwändig und somit teuer ist.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzubilden, dass ein prozesssicheres Fügen möglich ist.

Diese Aufgabe wird durch ein Verfahren mit den im Anspruch 1 angegebenen Merkmalen gelöst. Vorteilhafte Ausgestaltung und zweckmäßige Weiterbildung der vorliegenden Erfindung sind im Unteranspruch gekennzeichnet.

Ungeachtet des gemäß dem Stand der Technik bestehenden Vorurteils der ausgeprägten Sensitivität von Titan gegenüber nicht inerten Gasbestandteilen schlägt die vorliegende Erfindung vor, zum Lichtbogenfügen von Titan mindestens ein Inertgas mit aktivem Anteil oder mindestens ein Inertgasgemisch mit aktivem Anteil zuzuführen. Der aktive Anteil ist eine Dotierung aus Sauerstoff (O₂). Als Inertgas wird Argon (Ar) und/oder Helium (He) zugeführt.

Mithin basiert die vorliegende Erfindung darauf, beim Lichtbogenfügen, insbesondere beim M[etall-]S[chutz]G[as]-Schweißen, von Titan Schutzgas mit aktivem Anteil zuzuführen, obwohl die bekannte ausgeprägte Sensitivität von Titan gegenüber nicht inerten Gasbestandteilen den Einsatz eines solchen Gases nicht unbedingt angeraten erscheinen lässt.

Überraschenderweise zeigt sich jedoch, dass das Zuführen des Schutzgasgemisches aus Inertgas und aus Aktivgas beim Lichtbogenfügen von Titan und/oder von Titanlegierungen nicht zu einer Versprödung des gefügten Bereichs führt. Überraschend ist dies beim Sauerstoff , da bisher davon ausgegangen wurde, dass bereits äußert geringe Mengen an Sauerstoff zu einer Versprödung der Schweißnaht führen. Eine eigentlich zu erwartende Verschlechterung der mechanischen Eigenschaften des zu fügenden Bereichs aufgrund des Aktivgasanteils im Schutzgas ist also nicht zu beobachten. Deutlich zu erkennen ist hingegen, dass ein stabiler Fügeprozess stattfindet. Es entstehen qualitativ hochwertige Verbindungen. Insbesondere eine Verbesserung der Lichtbogenstabilität ist zu beobachten. Beispielsweise wurde folgender interner Laborversuch durchgeführt: Der Grundwerkstoff Titan des Gütegrades 2 gemäß der Klasseneinteilung der American Society for Testing and Materials (ASTM) bzw. der Werkstoff-Nummer 3.7035 wurde unter Zufuhr eines sauerstoffdotierten Inertgases, nämlich von Argon und von 0,03 Vol.-% (entsprechend 300 Teilen pro Million bzw. 300 ppm) Sauerstoff geschweißt. Beim Schweißen wurde artgleicher Schweißzusatz, also Titan Grade 2 (3.7035) zugeführt. Das Schweißen erfolgte vollmechanisiert, das heißt durch Führung des Brenners mittels eines Längsfahrwerks, mit einer Quinto-Impulsstromquelle der Firma Carl Cloos Schweißtechnik GmbH. Der zu schweißende Gegenstand hatte eine Blechdicke von zehn Millimetern. Als Schweißverfahren wurden sowohl M[etall-]S[chutz]G[as]-Schweißen als auch W[olfram-]I[nert]G[as]-Schweißen eingesetzt.

Zum Vergleich wurden konventionelle Schweißproben angefertigt, nämlich eine MIG-Schweißung sowie eine WIG-Schweißung, jeweils mit reinem Argon. Hierfür wurde das von der Firma Linde AG unter der Bezeichnung Argon 4.8 vertriebene Schutzgas eingesetzt. Dieses Schutzgas Argon 4.8 hat einen Reinheitsgrad von 99,998 Prozent bzw. weist als Nebenbestandteile maximal 3 ppm Sauerstoff (O₂), 10 ppm Stickstoff (N₂) und 5 ppm Feuchte (H₂O) auf.

Die mechanischen Eigenschaften, wie Zugfestigkeit und Kerbschlagarbeit, wurden im Prüflabor überprüft. Im Vergleich zur MIG-Schweißung mit Argon 4.8 sind die mechanischen Gütewerte bei der Schweißung mit Argon und 0,03 Vol.-% Sauerstoff nahezu identisch. Im Vergleich zur WIG-Schweißung mit Argon 4.8 sind die mechanischen Gütewerte bei der Schweißung mit Argon und 0,03 Vol.-% Sauerstoff sogar deutlich besser.

Beim Fügen und insbesondere beim Schweißen mit abschmelzender Elektrode zeigt sich, dass sich die Prozessstabilität mit dem erfindungsgemäßen Verfahren signifikant erhöht. Eine hohe Prozessstabilität ist die wesentliche Voraussetzung für das Schaffen von qualitativ hochwertigen Verbindungen. Eine hohe Prozessstabilität ermöglicht jedoch auch hohe Schweißgeschwindigkeiten oder/und eine große Menge an Zusatzwerkstoff, also eine hohe Produktivität. Insbesondere beim Schweißen mit Gleichstrom macht die Verbesserung der Prozessstabilität eine Erhöhung der Produktivität möglich, ohne dass sich dabei Qualitätseinbußen zeigen. Beim Schweißen mit Impulsstrom führt das erfindungsgemäße Verfahren zu qualitativ hochwertigen Nähten. Beim Schweißen mit Kurzschluss, also mit Kurzlichtbogen verbessert sich die Prozessstabilität insbesondere hinsichtlich des Ausmaßes der Spritzer, da mit dem erfindungsgemäßen Verfahren das Abreißen des abschmelzenden Werkstoffs beim Brechen des Kurzschlussstroms unterstützt wird. Dies zeigt sich bei den Kurzlichtbogen-Schweißverfahren sowohl mit ungeregelten als auch mit (meist elektronisch) geregeltem Kurzschluss. Beim Schweißen mit Wechselstrom ist nur eine geringe Produktivitätssteigerung möglich.

Die vorliegende Erfindung weist das zugeführte Schutzgas Inertgas mit einem Aktivgasanteil in einem Bereich von etwa 0,028 Vol.-% (280 vpm) bis etwa 0,035 Vol.-% (350 vpm) und insbesondere in einem Bereich von etwa 0,03 Vol.-% (300 vpm), auf.

Der Inertgas-Anteil des Schutzgases kann beispielsweise reines Argon oder Argon mit einem Heliumanteil von 25 Vol.-% bis etwa 30 Vol.-% und insbesonders von etwa 30 Vol.-%, aufweisen. Bei der Zumischung von Helium muss darauf geachtet werden, dass der Anteil derartig gewählt wird, dass die lichtbogenstabilisierende Wirkung der Dotierung dabei voll erhalten bleibt. Die Zumischung von Helium wirkt sich besonders bei größeren Blechdicken vorteilhaft aus, etwa beim Bau von Druckbehältern und Reaktoren.

Beim vorstehend beschriebenen internen Laborversuch bestand das zugeführte Schutzgas aus Sauerstoff (O₂) in einem Bereich von etwa 0,03 Vol.-% und im verbleibenden Volumenbereich aus Argon (Ar).

Gemäß einer weiteren vorteilhaften Ausführungsform der vorliegenden Erfindung kann das zugeführte Schutzgas beispielsweise
- Sauerstoff (O₂) in einem Bereich von etwa 0,03 Vol.-%,
- Helium (He) in einem Bereich von etwa 30 Vol.-% und
- im verbleibenden Volumenbereich Argon (Ar)
aufweisen.

## Patentansprüche

1. Verfahren zum M[etall-]S[chutz]G[as]-Schweißen oder zum M[etall-]S[chutz]G[as]-Löten, mindestens eines Gegenstands aus Titan oder aus einer Titanlegierung unter Schutzgas mit mindestens einer abschmelzenden Elektrode, wobei als Schutzgas mindestens ein Inertgas zugeführt wird,
**dadurch gekennzeichnet,**
**dass** das Schutzgas des Weiteren mindestens ein Aktivgas aufweist, wobei als Aktivgas Sauerstoff (O₂) in einem Bereich von etwa 0,028 Vol.-% bis etwa 0,035 Vol.-% und besonders bevorzugt in einem Bereich von etwa 0,03 Vol.-%, und
im verbleibenden Volumenbereich
als Inertgas Argon oder
Helium (He) in einem Bereich von 25 Vol.-% bis 30 Vol.-% und insbesondere in einem Bereich von etwa 30 Vol.-%, und im verbleibenden Volumenbereich Argon (Ar) aufweist,
wobei mit Gleichstrom, mit Impulsstrom oder mit Kurzschluss geschweißt oder gelötet wird.

2. Verfahren gemäß Anspruch 1, **dadurch gekennzeichnet, dass** das Schutzgas
- aus Sauerstoff (O₂) in einem Bereich von etwa 0,03 Vol.-% und
- im verbleibenden Volumenbereich aus Argon (Ar)
besteht.

3. Verfahren gemäß Anspruch 1, **dadurch gekennzeichnet, dass** das Schutzgas
- aus Sauerstoff (O₂) in einem Bereich von etwa 0,03 Vol.-%,
- aus Helium (He) in einem Bereich von etwa 30 Vol.-% und
- im verbleibenden Volumenbereich aus Argon (Ar)
besteht.

## Claims

1. Method for gas metal arc welding or gas metal arc brazing at least one object made of titanium or of a titanium alloy under shielding gas with at least one consumable electrode, wherein at least an inert gas is supplied as the shielding gas,
**characterized**
**in that** the shielding gas further comprises at least an active gas, comprising as active gas oxygen (O₂) in a range of approximately 0.028% by volume to approximately 0.035% by volume and particularly preferably in a range of approximately 0.03% by volume,
and
in the remaining volume range
comprising as inert gas argon or
helium (He) in a range of 25% by volume to 30% by volume and in particular in a range of approximately 30% by volume, and in the remaining volume range comprising argon (Ar),
welding or brazing being performed with direct current, with pulsed current or with short-circuiting.

2. Method according to Claim 1, **characterized in that** the shielding gas consists
- of oxygen (O₂) in a range of approximately 0.03% by volume and
- in the remaining volume range of argon (Ar).

3. Method according to Claim 1, **characterized in that** the shielding gas consists
- of oxygen (O₂) in a range of approximately 0.03% by volume,
- of helium (He) in a range of approximately 30% by volume and
- in the remaining volume range of argon (Ar).

## Revendications

1. Procédé de soudage ou de brasage MIG [soudage ou brasage à l'arc sous protection gazeuse avec métal d'apport] d'au moins un objet en titane ou en un alliage de titane sous gaz protecteur avec au moins une électrode fusible, dans lequel on fournit comme gaz protecteur au moins un gaz inerte, **caractérisé en ce que** le gaz protecteur présente en outre au moins un gaz actif, dans lequel il présente comme gaz actif de l'oxygène (O₂) dans une plage d'environ 0,028 % en volume à environ 0,035 % en volume et de préférence en particulier dans une plage d'environ 0,03 % en volume, et dans la plage volumique restante comme gaz inerte de l'argon ou de l'hélium (He) dans une plage de 25 % en volume à 30 % en volume et en particulier dans une plage d'environ 30 % en volume, et dans la part volumique restante de l'argon (Ar), dans lequel on soude ou on brase avec un courant continu, un courant pulsé ou en court-circuit.

2. Procédé selon la revendication 1, **caractérisé en ce que** le gaz protecteur se compose
- d'oxygène (O₂) dans une plage d'environ 0,03 % en volume et
- d'argon (Ar) dans la plage volumique restante.

3. Procédé selon la revendication 1, **caractérisé en ce que** le gaz protecteur se compose
- d'oxygène (O₂) dans une plage d'environ 0,03 % en volume,
- d'hélium (He) dans une plage d'environ 30 % en volume, et
- d'argon (Ar) dans la plage volumique restante.
